(19) **Europäisches Patentamt**
**European Patent Office**
**Office européen des brevets**

(11) **EP 2 278 752 A1**

(12) **EUROPÄISCHE PATENTANMELDUNG**

(43) Veröffentlichungstag:
**26.01.2011 Patentblatt 2011/04**

(51) Int Cl.:
*H04L 9/30* (2006.01)     *G01R 31/3193* (2006.01)

(21) Anmeldenummer: **10160598.8**

(22) Anmeldetag: **21.04.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA ME RS**

(30) Priorität: **30.06.2009 DE 102009031145**

(71) Anmelder: **SIEMENS AKTIENGESELLSCHAFT**
**80333 München (DE)**

(72) Erfinder:
• **Dr. Braun, Michael**
**81825, München (DE)**
• **Kargl, Anton**
**80997, München (DE)**

(54) **Vorrichtung und Verfahren zum Prüfen eines Chips, auf dem ein kryptographisches Verfahren implementiert ist**

(57) Die vorliegende Erfindung betrifft das Prüfen eines Chips, auf dem ein kryptographisches Verfahren implementiert ist. Dabei wird ein erstes Ergebnis bestimmt durch: ein erstes Ausführen der Basisfunktion unter Verwendung einer ersten Zahl als Parameter der Basisfunktion; und ein zweites Ausführen der Basisfunktion unter Verwendung einer zweiten Zahl als Parameter der Basisfunktion, wobei die erste und die zweite Zahl Zufallszahlen sind. Ein zweites Ergebnis wird bestimmt durch: Bestimmen einer dritten Zahl durch Ausführen einer mathematischen Operation, bei der die erste und die zweite Zahl Operanden der mathematischen Operation sind; und ein drittes Ausführen der Basisfunktion unter Verwendung der dritten Zahl als Parameter der Basisfunktion. Der Chip wird als fehlerfrei angezeigt, wenn das erste und das zweite Ergebnis gleich sind. Die vorliegende Erfindung ist dort anwendbar, wo ein sicheres Handhaben von Daten gewünscht ist. Sie ermöglicht ein zuverlässiges Testen von Chips, auf denen kryptographische Verfahren implementiert sind.

FIG 1

EP 2 278 752 A1

**Beschreibung**

Die vorliegende Erfindung betrifft das Testen oder Prüfen eines Chips, auf dem ein kryptographisches Verfahren implementiert ist. Insbesondere betrifft die vorliegende Erfindung eine Vorrichtung und ein Verfahren, die zum Testen des Chips konfiguriert sind. Ferner betrifft die vorliegende Erfindung auch ein entsprechend konfiguriertes Computerprogrammprodukt, einen entsprechend konfigurierten Datenträger und ein entsprechend konfiguriertes System.

Heutzutage werden sicherheitsrelevante Handlungen wie z.B. ein sicheres Handhaben von sensitiven Daten, die nicht jedem zugänglich sein sollen oder die nicht durch jeden gehandhabt werden sollen, durch Nutzung von Chips oder Chipkarten unterstützt. Auf solchen Chips oder Chipkarten werden oft kryptographische Algorithmen oder Verfahren implementiert und Systemparameter zum Ausführen der jeweiligen kryptographischen Algorithmen oder Verfahren abgespeichert, um das sichere Handhaben von sensitiven Daten zu ermöglichen.

Mittels eines derart ausgestalteten Chips oder einer derart ausgestalteten Chipkarte können Daten mittels der jeweiligen auf den Chips oder Chipkarten implementierten kryptographischen Verfahren oder Algorithmen bearbeitet werden, z.B. digital signiert oder entschlüsselt werden. Kryptographische Verfahren oder Algorithmen, die auf den Chips oder Chipkarten implementiert werden, können dabei beispielsweise das digitale Signieren, Entschlüsseln von Daten oder Informationen, Verschlüsseln von Daten oder Informationen, die Authentisierung und/oder das Prüfen von digitalen Signaturen aufweisen oder umfassen. Die vorliegende Erfindung ist dabei nicht auf ein konkretes kryptographisches Verfahren beschränkt, sie kann hinsichtlich verschiedener entsprechender kryptographischer Verfahren angewendet werden.

Kryptographische Algorithmen oder Verfahren, digitale Signaturen verwendende Verfahren, Verschlüsselungstechniken und in diesem Rahmen eingesetzte Chipkarten sind allgemein bekannt. Ebenso ist auch das Verwenden von digitalen Signaturen, (privaten und/oder öffentlichen) Schlüsseln zum Verschlüsseln und/oder Entschlüsseln von Daten oder Informationen allgemein bekannt.

Bei Implementierungen von kryptographischen Algorithmen oder Verfahren auf Chips oder Chipkarten (z.B. im Rahmen eines Signaturverfahrens) werden zu Beginn einer entsprechenden Applikation (z.B. bei einer Berechnung einer digitalen Signatur) einige Testdurchläufe im Bezug auf den jeweiligen Chip oder die jeweilige Chipkarte durchgeführt.

Dabei wird durch die Testdurchläufe überprüft, ob der kryptographische Algorithmus, der auf einem Chip oder einer Chipkarte implementiert ist und der unter Verwendung und somit durch Unterstützung des Chips oder der Chipkarte durchgeführt wird (um z.B. das digitale Signieren zu ermöglichen), ordnungsgemäß abläuft.

Ferner wird durch solche Testdurchläufe überprüft, ob die Systemparameter, die auf dem Chip oder auf der Chipkarte zum Durchführen des jeweiligen kryptographischen Algorithmus oder Verfahrens gespeichert sind, gültig sind.

Durch die Testdurchläufe soll verhindert werden, dass der jeweilige kryptographische Algorithmus oder das jeweilige kryptographische Verfahren ein fehlerhaftes Ergebnis liefert. Dieses wird insbesondere dann der Fall sein, wenn der Chip oder die Chipkarte zuvor bewusst und mit bösartiger Absicht manipuliert wurde oder wenn die Chipkarte durch anderweitige physikalische Einflüsse einen Schaden erlitten hat, d.h. in ihrer Funktionalität verändert wurde.

Somit wird durch ein solches Testen oder Prüfen der Chips oder Chipkarten sichergestellt, dass keine Manipulationen und/oder unbeabsichtigte Veränderungen der in diesem Rahmen verwendeten Chipkarten vorliegen und dass das jeweilige kryptographische Verfahren oder der jeweilige kryptographiche Algorithmus (z.B. zum digitalen Signieren oder zum Entschlüsseln von Daten) ordnungsgemäß und auf einem sicheren Wege durchgeführt wird. Insbesondere wird durch ein solches Testen oder Prüfen sichergestellt, dass die zu verwendende Chipkarte oder der jeweilige Chip korrekt funktioniert und dass die Vorrichtung, welche den jeweiligen kryptographischen Algorithmus oder das jeweilige kryptographische Verfahren unter Verwendung der Chipkarte oder des Chips durchführt, korrekt und sicher (d.h. mit Berechtigung) funktionieren wird.

Die bisherige Vorgehensweise zum Testen der Funktionalität von kryptographischen Algorithmen hängt von dem kryptographischen Verfahren selbst ab. Die vorliegende Erfindung bezieht sich insbesondere auf das Testen oder Prüfen von asymmetrischen kryptographischen Verfahren. Bei den asymmetrischen kryptographischen Verfahren besitzt jede der kommunizierenden Einheiten ein Schlüsselpaar, das aus einem geheimen Teil (privaten Schlüssel) und einem nicht geheimen Teil (öffentlichen Schlüssel) besteht. Der öffentliche Schlüssel ermöglicht es jedermann, Daten für den Inhaber des privaten Schlüssels zu verschlüsseln, dessen digitale Signaturen zu prüfen oder ihn zu authentifizieren. Der private Schlüssel ermöglicht es seinem Inhaber, mit dem öffentlichen Schlüssel verschlüsselte Daten zu entschlüsseln, digitale Signaturen zu erzeugen oder sich zu authentisieren. Solche asymmetrischen kryptographischen Verfahren sind allgemein bekannt. Als Beispiele für asymmetrische kryptographische Verfahren können DSA (englisch: Digital Signature Algorithm), RSA oder ECC (englisch: Elliptic Curve Cryptosystems) genannt werden.

Wenn es um das Testen eines ECC-Verfahrens geht, so berechnet man gemäß einer bekannten Vorgehensweise zu einem gegebenen Punkt $P$ einer elliptischen Kurve die Vielfachen $(k-1)*P$, $k*P$ und $(k+1)*P$ des Punktes $P$, wobei $k$ die Ordnung des Punktes $P$ auf der elliptischen Kurve ist. Eine Aussage über die Korrektheit bekommt man dabei über den Vergleich der Ergebnisse mit $P$ selbst. Im Falle $(k-1)*P$ erhält man bei einer korrekten Funktionsweise des ECC-Verfahrens den negativen Punkt von *P*, d.h. (k-1)\*P=-P. D.h. hier stimmen die x-Koordinaten von (k-1)\*P und *P* überein. Die y-Koordinaten ergeben sich aus $y' = p - y$ für Körper der Charakteristik größer 3 und aus $y' = x - y$ für Körper der Charakteristik 2, wobei *y'* die y-Koordinate von (k-1)\*P ist. Aus der Skalarmultiplikation k\*P erhält man bei einem korrekten Ablauf des ECC-Verfahrens den unendlich fernen Punkt. (k +1)\*P wird bei einem korrekten Ablauf des ECC-Verfahrens den *P* selbst als Ergebnis liefern. Sind die vorstehend beschriebenen Erwartungen im Hinblick auf die gewünschten Werte von (k-1)\*P, k\*P und (k+1)\*P erfüllt, so wird ein korrektes Funktionieren des getesteten ECC-Verfahrens bestätigt.

Beim Verwenden von kryptographischen Verfahren, die auf der modularen Exponentiation (z.B. DSA) basieren, wird in den bekannten Testverfahren analog zu der vorstehend beschriebenen Vorgehensweise zum Testen eines ECC-Verfahrens vorgegangen. Dabei werden zu einem Generator *x* die Werte $x^{k-2}$ mod *n*, $xk^{-1}$ mod *n* und $x^k$ mod *n* berechnet. Bei einer korrekten Funktionsweise des kryptographischen Verfahrens mit der modularen Exponentiation muss der Wert von $x^{k-2}$ mod *n* der multiplikativen Inversen von *x* entsprechen, der Wert von $x^{k-1}$ mod *n* muss den Wert 1 haben und der Wert von $x^k$ mod *n* muss wiederum mit *x* übereinstimmen. Sind diese drei Wert-Entsprechungen oder Übereinstimmungen gegeben, kann das auf die modulare Exponentiation basierte kryptographische Verfahren als richtig ablaufend bestätigt werden.

Die bisher bekannten Testverfahren sind aber statische Verfahren. Dabei besteht die Möglichkeit, dass die Verzweigungen eines auf einem Chip oder einer Chipkarte implementierten kryptographischen Verfahrens derart manipuliert werden, dass das Testverfahren aufgrund seines statischen Charakters dennoch ein positives Ergebnis liefert, obwohl eine Manipulation und somit Veränderung der jeweiligen Chipkarte oder des jeweiligen Chips vorliegt. D.h. das Testergebnis zeigt ein korrektes Funktionieren des Chips oder der Chipkarte an, obwohl eine Manipulation und/oder eine Veränderung des kryptographischen Verfahrens und/oder der Systemparameter zu dem kryptographischen Verfahren auf dem Chip oder auf der Chipkarte gegeben sind.

Somit weisen die bisher bekannten Testverfahren immer noch einen Mangel an Zuverlässigkeit hinsichtlich der Testergebnisse auf, da es vorkommen kann, dass ein manipulierter Chip oder eine manipulierte Chipkarte durch die Testverfahren falscher Weise als funktional unverändert und somit als richtig funktionierend bestätigt wird. Daher besteht immer noch Bedarf an solchen Testverfahren, die eine korrekte Überprüfung einer Chipkarte oder eines Chips ermöglichen, zuverlässige Testergebnisse liefern und dabei ein sicheres, zuverlässiges und korrektes Funktionieren der testenden Vorrichtung erlauben.

Die Aufgabe der vorliegenden Erfindung besteht darin, ein verbessertes Verfahren zum Prüfen von Chips oder Chipkarten, auf denen kryptographische Verfahren oder Algorithmen implementiert sind, bzw. eine entsprechende Vorrichtung bereitzustellen.

Die Aufgabe wird gelöst durch eine zum Prüfen eines Chips konfigurierte Vorrichtung mit den Merkmalen des Anspruchs 1, durch ein Verfahren mit den Merkmalen des Anspruchs 18, durch ein Computerprogrammprodukt mit den Merkmalen des Anspruchs 19, durch einen Datenträger mit den Merkmalen des Anspruchs 20 und/oder durch ein System mit den Merkmalen des Anspruchs 21.

Die Unteransprüche geben weitere Ausgestaltungen der vorliegenden Erfindung an.

Die oben genannte Aufgabe wird durch eine Vorrichtung gelöst, die zum Prüfen eines Chips konfiguriert ist, auf dem ein kryptographisches Verfahren implementiert ist, wobei die Vorrichtung aufweist:

- ein erstes rechnendes Modul, das konfiguriert ist, ein erstes Ergebnis zu bestimmen durch:

  - ein erstes Ausführen einer Basisfunktion des kryptographischen Verfahrens unter Verwendung einer ersten Zahl als einen Parameter der Basisfunktion, wobei die erste Zahl eine Zufallszahl ist; und

  - ein zweites Ausführen der Basisfunktion des kryptographischen Verfahrens unter Verwendung einer zweiten Zahl als den Parameter der Basisfunktion, wobei die zweite Zahl eine Zufallszahl ist;

- ein zweites rechnendes Modul, das konfiguriert ist, ein zweites Ergebnis zu bestimmen durch:

  - Bestimmen einer dritten Zahl durch Ausführen einer mathematischen Operation, bei der die erste und die zweite Zahl Operanden der mathematischen Operation sind; und

  - ein drittes Ausführen der Basisfunktion des kryptographischen Verfahrens unter Verwendung der dritten Zahl als den Parameter der Basisfunktion;

- ein anzeigendes Modul, das konfiguriert ist, den Chip als fehlerfrei anzuzeigen, wenn das erste Ergebnis und das zweite Ergebnis gleich sind (z.B. Werte aufweisen, die gleich sind oder im gleichen Bereich liegen), und den Chip als fehlerhaft anzuzeigen, wenn das erste Ergebnis und das zweite Ergebnis verschieden sind (z.B. Werte aufweisen, die nicht gleich sind oder nicht im gleichen Bereich liegen).

Auf diese Weise erlaubt die vorliegende Erfindung ein zufallsbasiertes Testen von Chips, das nicht vorhersehbar ist und somit nicht manipulierbar ist. Dadurch wird ein zuverlässiges Testen von Chips ermöglicht, auf denen kryptographsische Verfahren implementiert sind.

Die Basisfunktion eines kryptographischen Verfahrens entspricht dabei der Funktion, auf der das kryptographische Verfahren basiert oder unter Verwendung derer das kryptographische Verfahren ausgeführt wird.

Es ist anzumerken, dass das Prüfen des Chips oder einer Chipkarte ein Prüfen des auf dem Chip implementierten kryptographischen Verfahrens und/oder ein Prüfen von den auf dem Chip gespeicherten Systemparametern, durch unter Verwendung derer das kryptographische Verfahren durchgeführt wird, umfasst.

Dabei werden durch die vorliegende Erfindung asymmetrische kryptographische Verfahren (die auf einem Chip oder einer Chipkarte implementiert sind) getestet. Diese können z.B. auf einer modularen Exponentiation oder auf einer Skalarmultiplikation bei elliptischen Kurven basiert sein. D.h. in diesen Fällen wird die Basisfunktion die modulare Exponentiation oder die Skalarmultiplikation bei elliptischen Kurven aufweisen.

Gemäß einem Ausführungsbeispiel der vorliegenden Erfindung weist die Vorrichtung einen Zufallszahlengenerator auf, der konfiguriert ist, die erste Zahl und die zweite Zahl zu bestimmen oder zu generieren. Auf diese Weise sind eine flexible Ausgestaltung der Vorrichtung und ein flexibles und schnelles Ausführen der vorliegenden Erfindung möglich.

Gemäß einem Ausführungsbeispiel der vorliegenden Erfindung ist das erste rechnende Modul konfiguriert, das erste Ergebnis durch ein Summieren von Ergebnissen des ersten Ausführens der Basisfunktion und des zweiten Ausführens der Basisfunktion zu bestimmen. Dabei ist die mathematische Operation eine Addition.

Gemäß dem vorliegenden Ausführungsbeispiel kann die Basisfunktion Operationen auf Punkten einer elliptischen Kurve aufweisen und der Parameter der Basisfunktion kann ein skalarer Wert sein, der mit einem Punkt der elliptischen Kurve multipliziert wird.

Ferner können gemäß dem vorliegenden Ausführungsbeispiel das erste rechnende Modul und das zweite rechnende Modul derart konfiguriert sein, dass:

- das erste Ausführen der Basisfunktion des kryptographischen Verfahrens ein Multiplizieren der ersten Zahl mit dem Punkt der elliptischen Kurve aufweist;

- das zweite Ausführen der Basisfunktion des kryptographischen Verfahrens ein Multiplizieren der zweiten Zahl mit dem Punkt der elliptischen Kurve aufweist; und

- das dritte Ausführen der Basisfunktion des kryptographischen Verfahrens ein Multiplizieren der dritten Zahl mit dem Punkt der elliptischen Kurve aufweist.

Allgemein sind gemäß dem vorliegenden Ausführungsbeispiel das erste und das zweite rechnende Modul derart konfiguriert, dass sie die Gleichung $(r+s)*P = r*P+s*P$ prüfen, wobei das erste rechnende Modul das Ergebnis der rechten Seite ($r*P+s*P$) der Gleichung berechnet und das zweite rechnende Modul das Ergebnis der linken Seite ($(r+s)*P$) der Gleichung berechnet, wobei $P$ der Punkt der elliptischen Kurve ist und $r$ und $s$ die erste und die zweite Zufallszahlen sind. Gemäß dem vorliegenden Ausführungsbeispiel ist die Basisfunktion eine Skalarmultiplikation bei elliptischen Kurven.

Ferner können gemäß dem vorliegenden Ausführungsbeispiel die elliptische Kurve und der Punkt der elliptischen Kurve Systemparameter sein, die auf dem Chip gespeichert sind, und die Vorrichtung kann dabei ein Lesemodul aufweisen, das konfiguriert ist, die Systemparameter aus dem Chip zu lesen.

Gemäß einem weiteren Ausführungsbeispiel der vorliegenden Erfindung ist das erste rechnende Modul konfiguriert, das erste Ergebnis durch ein Multiplizieren von Ergebnissen des ersten Ausführens der Basisfunktion und des zweiten Ausführens der Basisfunktion zu bestimmen, wobei die mathematische Operation eine Addition ist.

Gemäß dem vorliegenden Ausführungsbeispiel kann die Basisfunktion ein Ausführen einer modularen Exponentiation aufweisen, die im Bezug auf einen vorbestimmten Modul und auf einen vorbestimmten Basiswert ausgeführt wird. Dabei gibt der Parameter der Basisfunktion eine Zahl zum Potenzieren des vorbestimmten Basiswerts angibt.

Ferner können gemäß dem vorliegenden Ausführungsbeispiel das erste rechnende Modul und das zweite rechnende Modul derart konfiguriert sein, dass:

- das erste Ausführen der Basisfunktion ein Anwenden der modularen Exponentiation mit dem vorbestimmten Modul und dem vorbestimmten Basiswert aufweist, wobei der vorbestimmte Basiswert mit der ersten Zahl potenziert wird;

- das zweite Ausführen der Basisfunktion ein Anwenden der modularen Exponentiation mit dem vorbestimmten Modul und dem vorbestimmten Basiswert aufweist, wobei der vorbestimmte Basiswert mit der zweiten Zahl potenziert wird; und

- das dritte Ausführen der Basisfunktion ein Anwenden der modularen Exponentiation mit dem vorbestimmten Modul und dem vorbestimmten Basiswert aufweist, wobei der vorbestimmte Basiswert mit der dritten Zahl potenziert wird.

Allgemein sind gemäß dem vorliegenden Ausführungsbeispiel das erste und das zweite rechnende Modul derart konfiguriert, dass sie die Gleichung $x^{a+b} \bmod n = [(x^a \bmod n)(x^b \bmod n)] \bmod n$ prüfen, wobei das erste rechnende Modul das Ergebnis der rechten Seite $([(x^a \bmod n \; x^b \bmod n)] \bmod n)$ der Gleichung berechnet und das zweite rechnende Modul das Ergebnis der linken Seite $(x^{a+b} \bmod n)$ der Gleichung berechnet, wobei $x$ der vorbestimmte Basiswert ist und $n$ der vorbestimmte Modul ist. Gemäß dem vorliegenden Ausführungsbeispiel ist die Basisfunktion eine modulare Exponentiation.

Gemäß dem vorliegenden Ausführungsbeispiel können der vorbestimmte Modul und der vorbestimmte Basiswert Systemparameter sein, die auf dem Chip gespeichert sind. Dabei weist die Vorrichtung ein Lesemodul auf, das konfiguriert ist, die Systemparameter aus dem Chip zu lesen.

Gemäß einem weiteren Ausführungsbeispiel ist das erste rechnende Modul konfiguriert, das zweites Ausführen der Basisfunktion im Bezug auf ein durch das erste Ausführen erhaltene Ergebnis durchzuführen, und wobei die mathematische Operation eine Multiplikationsoperation ist.

Gemäß dem vorliegenden Ausführungsbeispiel kann die Basisfunktion Operationen auf Punkten einer elliptischen Kurve aufweisen. Dabei ist der Parameter der Basisfunktion ein skalarer Wert, der mit einem Punkt der elliptischen Kurve multipliziert wird.

Ferner können gemäß dem vorliegenden Ausführungsbeispiel das erste rechnende Modul und das zweite rechnende Modul derart konfiguriert sein, dass:

- das erste Ausführen der Basisfunktion des kryptographischen Verfahrens ein Multiplizieren der ersten Zahl mit dem Punkt der elliptischen Kurve aufweist;

- das zweite Ausführen der Basisfunktion des kryptographischen Verfahrens ein Multiplizieren der zweiten Zahl mit einem weiteren Punkt der elliptischen Kurve aufweist, wobei der weitere Punkt der elliptischen Kurve durch das erste Ausführen erhalten wird; und

- das dritte Ausführen der Basisfunktion des kryptographischen Verfahrens ein Multiplizieren der dritten Zahl mit dem Punkt der elliptischen Kurve aufweist.

Allgemein sind gemäß dem vorliegenden Ausführungsbeispiel das erste und das zweite rechnende Modul dabei derart konfiguriert, dass sie die Gleichung $(r*s)*P = r*(s*P)$ prüfen, wobei das erste rechnende Modul das Ergebnis der rechten Seite $(r*(s*P))$ der Gleichung berechnet und das zweite rechnende Modul das Ergebnis der linken Seite $((r*s)*P)$ der Gleichung berechnet, wobei $P$ der Punkt der elliptischen Kurve ist und $r$ und $s$ die erste und die zweite Zufallszahlen sind. Gemäß dem vorliegenden Ausführungsbeispiel ist die Basisfunktion eine Skalarmultiplikation bei elliptischen Kurven.

Ferner können gemäß dem vorliegenden Ausführungsbeispiel die elliptische Kurve und der Punkt der elliptischen Kurve Systemparameter sein, die auf dem Chip gespeichert sind, und die Vorrichtung kann dabei ein Lesemodul aufweisen, das konfiguriert ist, die Systemparameter aus dem Chip zu lesen.

Gemäß einem weiteren Ausführungsbeispiel der vorliegenden Erfindung weist die Basisfunktion eine modulare Exponentiation ist, die im Bezug auf einen vorbestimmten Modul und auf einen vorbestimmten Basiswert ausgeführt wird. Dabei gibt der Parameter der Basisfunktion eine Zahl zum Potenzieren des vorbestimmten Basiswerts an.

Gemäß dem vorliegenden Ausführungsbeispiel der vorliegenden Erfindung können das erste rechnende Modul und das zweite rechnende Modul derart konfiguriert sein, dass:

- das erste Ausführen der Basisfunktion ein Anwenden der modularen Exponentiation mit dem vorbestimmten Modul und dem vorbestimmten Basiswert aufweist, wobei der vorbestimmte Basiswert mit der ersten Zahl potenziert wird;

- das zweite Ausführen der Basisfunktion ein Anwenden der modularen Exponentiation mit dem vorbestimmten Modul und einem Ergebnis des ersten Ausführens als Basiswert aufweist, wobei das Ergebnis des ersten Ausführens mit der zweiten Zahl potenziert wird; und

- das dritte Ausführen der Basisfunktion ein Durchführen der modularen Exponentiation mit dem vorbestimmten Modul und dem vorbestimmten Basiswert aufweist, wobei der vorbestimmte Basiswert mit der dritten Zahl potenziert wird.

Allgemein sind gemäß dem vorliegenden Ausführungsbeispiel das erste und das zweite rechnende Modul dabei derart konfiguriert, dass sie die Gleichung $x^{a*b}$ mod $n$ = $(x^a$ mod $n)^b$ mod $n$ prüfen, wobei das erste rechnende Modul das Ergebnis der rechten Seite $((x^a$ mod $n)^b$ mod $n)$ der Gleichung berechnet und das zweite rechnende Modul das Ergebnis der linken Seite $(x^{a*b}$ mod $n)$ der Gleichung berechnet, wobei $x$ der vorbestimmte Basiswert ist und $n$ das vorbestimmte Modulo ist. Gemäß dem vorliegenden Ausführungsbeispiel ist die Basisfunktion eine modulare Exponentiation.

Gemäß dem vorliegenden Ausführungsbeispiel können der vorbestimmte Modul und der vorbestimmte Basiswert Systemparameter sein, die auf dem Chip gespeichert sind. Dabei weist die Vorrichtung ein Lesemodul auf, das konfiguriert ist, die Systemparameter aus dem Chip zu lesen.

Gemäß einem Ausführungsbeispiel der vorliegenden Erfindung weist das kryptographische Verfahren zumindest eine der folgenden Aktionen auf:

- Verschlüsseln von Daten;

- Entschlüsseln von Daten;

- Authentisierung;

- digitales Signieren; und/oder

- Prüfen einer digitalen Signatur.

Gemäß einem weiteren Ausführungsbeispiel der vorliegenden Erfindung ist die Vorrichtung ausgestaltet, das kryptographische Verfahren durchzuführen und das Prüfen des Chips vor dem Durchführen des kryptographischen Verfahrens auszuführen.

Die Aufgabe der vorliegenden Erfindung wird des Weiteren durch ein Verfahren zum Prüfen eines Chips, auf dem ein kryptographisches Verfahren implementiert ist, gelöst. Dabei weist das Verfahren auf:

- Bestimmen eines ersten Ergebnisses durch:

  - ein erstes Ausführen einer Basisfunktion des kryptographischen Verfahrens unter Verwendung einer ersten Zahl als einen Parameter der Basisfunktion, wobei die erste Zahl eine Zufallszahl ist; und

  - ein zweites Ausführen der Basisfunktion des kryptographischen Verfahrens unter Verwendung einer zweiten Zahl als den Parameter der Basisfunktion, wobei die zweite Zahl eine Zufallszahl ist;

- Bestimmen eines ersten Ergebnisses durch:

  - Bestimmen einer dritten Zahl durch Ausführen einer mathematischen Operation, bei der die erste und die zweite Zahl Operanden der mathematischen Operation sind; und
  - ein drittes Ausführen der Basisfunktion des kryptographischen Verfahrens unter Verwendung der dritten Zahl als den Parameter der Basisfunktion;

- Anzeigen von Ergebnissen des Prüfens des Chips, wobei der Chip als fehlerfrei angezeigt wird, wenn das erste Ergebnis und das zweite Ergebnis gleich sind (z.B. Werte aufweisen die gleich sind oder im gleichen Bereich liegen), und wobei der Chip als fehlerhaft angezeigt wird, wenn das erste Ergebnis und das zweite Ergebnis verschieden sind (z.B. Werte aufweisen, die nicht gleich sind oder die nicht im gleichen Bereich liegen).

Allgemein wird das Verfahren durch die oben skizzierte und nachfolgend genauer erläuterte Vorrichtung durchgeführt. Das Verfahren weist somit solche Schritte auf, welche den Aktionen der oben skizzierten und nachfolgend genauer erläuterten Vorrichtung oder ihrer Module zum Prüfen des Chips entsprechen.

Ferner wird die Aufgabe der vorliegenden Erfindung durch ein Computerprogrammprodukt gelöst, das eine Kodierung aufweist, die konfiguriert ist, das oben skizzierte und nachfolgend genauer erläuterte Verfahren zu implementieren und/oder auszuführen. Dabei kann die Kodierung in einem Datenträger enthalten sein.

Gemäß einem Ausführungsbeispiel der vorliegenden Erfindung ist das Computerprogrammprodukt konfiguriert, das Verfahren durchzuführen, wenn das Computerprogrammprodukt mittels einer rechnenden Einheit ausgeführt wird. Gemäß einem weiteren Ausführungsbeispiel der vorliegenden Erfindung ist diese rechnende Einheit in der oben skizzierten und nachfolgend genauer erläuterten Vorrichtung, die zum Prüfen des Chips konfiguriert ist, enthalten.

Zusätzlich wird die oben genannte Aufgabe mittels eines Datenträgers gelöst, wobei der Datenträger das vorstehend erläuterte Computerprogrammprodukt aufweist.

Ferner wird die oben genannte Aufgabe auch mittels eines Systems gelöst, wobei das System die oben skizzierte und nachfolgend genauer erläuterte Vorrichtung aufweist.

Durch die vorliegende Erfindung wird ein verbessertes Prüfen von Chips oder Chipkarten, auf denen ein kryptographischer Algorithmus implementiert ist, bereitgestellt. Dabei wird ein zufallsbasiertes Prüfen oder Testen von Chips oder Chipkarten durchgeführt, das nicht vorhersagbar ist und das ein zuverlässiges Aufdecken von Manipulationen oder Veränderungen von Chips oder Chipkarten ermöglicht. Ferner bietet die vorliegende Erfindung auch ein effizient durchführbares Prüfen oder Testen von Chips oder Chipkarten. D.h. die Vorrichtung, welche das erfindungsgemäße Prüfen oder Testen von Chips oder Chipkarten durchführt, kann dieses schnell und mit minimalen Kosten im Hinblick auf die dafür notwendigen Ressourcen vollziehen.

Im Folgenden werden Ausführungsformen der vorliegenden Erfindung detailliert mit Bezug auf die unten beigefügten Figuren beschrieben.

Es zeigen:

Fig. 1     ein System, in dem die vorliegende Erfindung gemäß einem Ausführungsbeispiel der Erfindung implementiert wird;

Fig. 2     ein Ablaufdiagramm, das Abläufe des Verfahrens zum Prüfen eines Chips gemäß einem Ausführungsbeispiel der vorliegenden Erfindung darstellt;

Fig. 3     eine Summenoperation zwischen zwei Punkten einer el- liptischen Kurve, welche zum Prüfen eines Chips gemäß einem Ausführungsbeispiel der vorliegenden Erfindung verwendet wird;

Fig. 4     eine Multiplikation eines Punktes einer elliptischen Kurve mit einer Zahl, welche zum Prüfen eines Chips gemäß einem Ausführungsbeispiel der vorliegenden Er- findung verwendet wird; und

Fig. 5     das Ausführen des Prüfens eines Chips gemäß einem Ausführungsbeispiel der vorliegenden Erfindung.

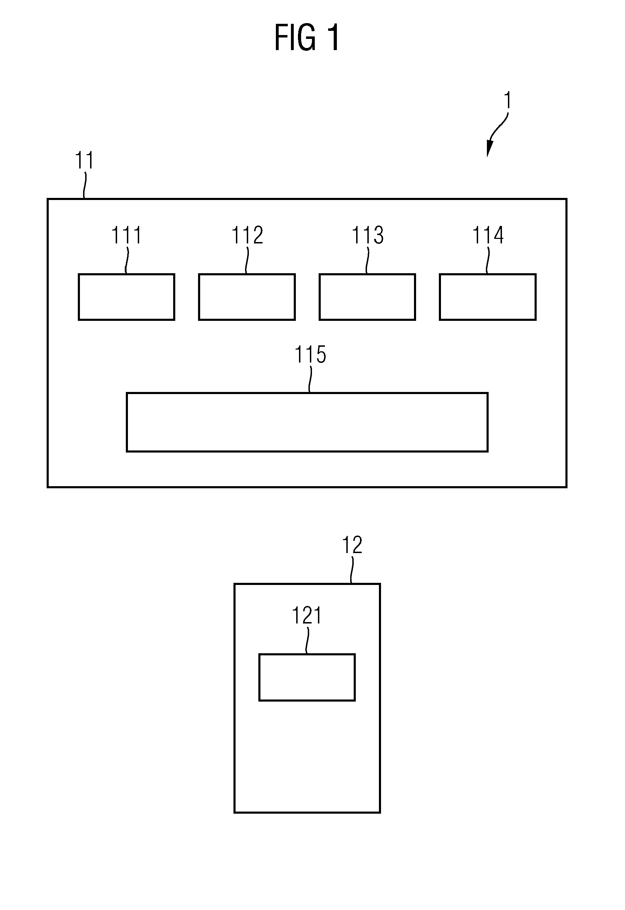

Fig. 1 zeigt ein System 1, in dem die vorliegende Erfindung gemäß einem Ausführungsbeispiel der Erfindung implementiert wird. Das System 1 weist eine Vorrichtung 11, die zum Prüfen von solchen Chips konfiguriert ist, auf denen asymmetrische kryptographische Verfahren implementiert sind. Wie oben erwähnt, können solche asymmetrischen kryptographischen Verfahren das digitale Signieren oder das Entschlüsseln von Daten oder Informationen umfassen. Ferner können solche asymmetrische kryptographische Verfahren beispielsweise auch das Verschlüsseln von Daten oder Informationen, die Authentisierung oder das Prüfen von digitalen Signaturen betreffen. Die vorliegende Erfindung ist nicht auf ein konkretes asymmetrisches kryptographisches Verfahren beschränkt, sie kann hinsichtlich verschiedener entsprechender asymmetrischer kryptographischer Verfahren angewendet werden, die auf einer Chipkarte implementierbar sind.

Gemäß dem vorliegenden Ausführungsbeispiel ist die Vorrichtung 11 konfiguriert, den Chip 121 der Chipkarte 12 zu prüfen. Auf dem Chip 121 ist zumindest ein bestimmtes kryptographisches Verfahren implementiert. Hierfür sind auf dem Chip 121 entsprechende Systemparameter gespeichert, welche das Ausführen des jeweiligen kryptographischen Verfahrens ermöglichen. Die jeweiligen Systemparameter hängen von der Funktionsweise und der Art des kryptographischen Verfahrens ab und sind durch die vorliegende Erfindung nicht festgelegt. Insbesondere beschreiben oder charakterisieren die jeweiligen Systemparameter die Basisfunktion des jeweiligen kryptographischen Verfahrens.

Gemäß dem vorliegenden Ausführungsbeispiel werden insbesondere die auf dem Chip 121 gespeicherten Systemparameter und die Implementierung des auf dem Chip 121 implementierten kryptographischen Verfahrens getestet.

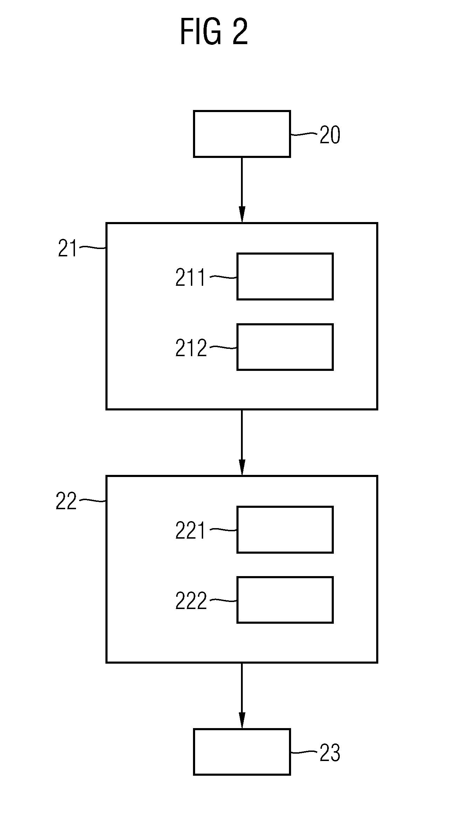

Fig. 2 zeigt ein Ablaufdiagramm, das Abläufe des Verfahrens zum Prüfen eines Chips gemäß dem vorliegenden Ausführungsbeispiel der vorliegenden Erfindung darstellt.

Gemäß dem vorliegenden Ausführungsbeispiel weist die Vorrichtung 11 einen Zufallszahlengenerator 114 auf, der konfiguriert ist, Zufallszahlen zu generieren oder zu erstellen. In Schritt 20 werden durch den Zufallszahlengenerator 114 zwei Zufallszahlen generiert, die zum Prüfen oder Testen des Chips 121 verwendet werden.

In Schritt 21 wird durch das erste rechnende Modul 111 ein erstes Ergebnis im Hinblick auf die Basisfunktion des auf dem Chip 121 implementierten kryptographischen Verfahrens bestimmt.

Dabei wird in Schritt 211 durch das erste rechnende Modul 111 der Vorrichtung 11 ein erstes Ausführen einer Basisfunktion des auf dem Chip 121 implementierten kryptographischen Verfahrens vorgenommen, wobei die erste Zahl der in Schritt 20 generierten Zufallszahlen als ein Parameter der Basisfunktion eingesetzt wird.

Wie bereits erwähnt, sind die Systemparameter zum Durchführen der Basisfunktion auf dem Chip 121 der Chipkarte 12 gespeichert. Gemäß dem vorliegenden Ausführungsbeispiel weist die Vorrichtung 11 ein Lesemodul 115 auf, das konfiguriert ist, die Systemparameter aus dem Chip 121 zu lesen und an die Module 111, 112, die die Basisfunktion mit den Systemparametern ausführen, bereitzustellen.

In Schritt 212 wird durch das erste rechnende Modul 111 der Vorrichtung 11 ein zweites Ausführen der Basisfunktion des kryptographischen Verfahrens vorgenommen, wobei die zweite Zahl der in Schritt 20 generierten Zufallszahlen als Parameter der Basisfunktion verwendet wird.

In Schritt 22 wird durch das zweite rechnende Modul 111 ein zweites Ergebnis im Hinblick auf die Basisfunktion des auf dem Chip 121 implementierten kryptographischen Verfahrens bestimmt.

Hier ist anzumerken, dass die Ausgestaltung der rechnenden Module 111, 112 verschiedenartig sein kann. So zum Beispiel können die rechnenden Module 111, 112 auch in einem gemeinsamen rechnenden Modul enthalten sein oder zu einem gemeinsamen rechenden Modul verschmolzen sein. Ferner können die rechnenden Module 111, 112 auch weitere Funktionalitäten erfüllen.

In Schritt 221 wird ein Bestimmen einer dritten Zahl durchgeführt. Dabei wird eine mathematische Operation im Bezug auf die erste und die zweite Zahl angewendet. Die mathematische Operation kann zum Beispiel das Addieren oder das Multiplizieren der ersten und der zweiten Zahl aufweisen. Gemäß dem vorliegenden Ausführungsbeispiel wird der Schritt 221 durch das zweite rechnende Modul 112 der Vorrichtung 11 vorgenommen.

In Schritt 222 nimmt der zweite rechende Modul 112 ein drittes Ausführen der Basisfunktion vor, wobei die in Schritt 221 bestimmte dritte Zahl als Parameter der Basisfunktion verwendet wird.

Durch das Ausführen der Schritte 211 und 212 wird durch das erste rechnende Modul 111 ein erstes Ergebnis bestimmt 21 und durch das Ausführen der Schritte 221 und 222 wird durch das zweite rechnende Modul 112 ein zweites Ergebnis bestimmt 22. An dieser Stelle ist anzumerken, dass die Schritte 21 und 22 sowohl sequentiell als auch parallel zu einander ausgeführt werden können. Das parallele Ausführen der Schritte 21 und 22 bietet sich z.B. dann an, wenn das Bestimmen 21 des ersten Ergebnisses und das Bestimmen 22 des zweiten Ergebnisses unabhängig von einander durchgeführt werden können. Ebenso können auch die Schritte 211 und 212 sequentiell oder parallel zu einander ausgeführt werden.

In Schritt 23 werden das erste und das zweite Ergebnis mit einander verglichen, um ein Ergebnis des Prüfens oder Testens des Chips 121 zu erzielen. Gemäß dem vorliegenden Ausführungsbeispiel wird der Schritt 23 durch das anzeigende Modul 113 der Vorrichtung 11 durchgeführt. Dabei zeigt das Modul 113 den Chip 121 als fehlerfrei (d.h. als nicht manipuliert oder physikalisch unverändert) an, wenn das erste Ergebnis und das zweite Ergebnis gleich sind. Sind aber das erste Ergebnis und das zweite Ergebnis verschieden (z.B. das erste Ergebnis und das zweite Ergebnis weisen Werte auf, die nicht gleich sind), zeigt das Modul 113 den Chip 121 als fehlerhaft (d.h. als manipuliert oder physikalisch verändert) an. Im letzteren Fall kann der Chip 121 und somit die Chipkarte 12 nicht zum Initiieren oder Starten des Durchführen des jeweiligen kryptographischen Verfahrens verwendet werden.

Auf diese Weise wird mit der vorliegenden Erfindung ein randomisierter oder zufallsbedingter Test vorgeschlagen, mit dem die ordnungsgemäße Funktionalität einer kryptographischen Basisoperation überprüft wird. Dieser Test kann insbesondere bezüglich asymmetrischer kryptographischer Algorithmen durchgeführt werden. So zum Beispiel funktioniert dieser Test sowohl für die Basisoperationen in RSA- bzw. in diskreten Logarithmen-Verfahren (also die modulare Exponentiation $x^k$ mod $n$) als auch für die Basisoperation von elliptischen Kurven-Verfahren, z.B. die Skalarmultiplikation $k*P$.

Zunächst wird im Folgenden beispielhaft auf solche kryptographische Verfahren eingegangen, deren Basisoperation auf modularer Multiplikation (d.h. $x^k$ mod $n$) beruht. Dabei sind der Basiswert $x$ und der Modul $n$ im Verfahren fest vorgegeben. D.h. der Basiswert $x$ und der Modul $n$ liegen als auf dem Chip 121 gespeicherte Systemparameter vor. Der Exponent wird dabei in der Regel ein ephemeraler Schlüssel oder der private Schlüssel sein.

Gemäß einem Ausführungsbeispiel der vorliegenden Erfindung wird der Chip 121 und somit das auf dem Chip implementierte kryptographische Verfahren, dessen Basisoperation auf der modularen Multiplikation (d.h. $x^k$ mod $n$) beruht, durch das Verwenden der folgenden Gleichung geprüft:

$$x^{a+b} \bmod n \;=\; \left[\left(x^a \bmod n\right)\left(x^b \bmod n\right)\right] \bmod n \,.$$

Gemäß dem vorliegenden Ausführungsbeispiel werden zwei zufällige Werte $a$ und $b$ gewählt. Wie oben beschrieben erfolgt dieses in Schritt 20 durch den Zufallszahlgenerator 114 der Vorrichtung 11. Anschließend wird die vorstehende Gleichung unter Verwendung der Systemparameter $x$ und $n$ und unter Verwendung der Zufallszahlen $a$ und $b$ überprüft. Dieses erfolgt im Wesentlichen in den Schritten 21 und 22 durch das erste rechnende Modul 111 und das zweite rechnende Module 112, wobei in Schritt 21 die rechte Seite der obigen Gleichung durch das erste rechnende Modul 111 geprüft wird und in Schritt 22 die linke Seite der obigen Gleichung durch das zweite rechnende Modul 112 geprüft wird.

Dabei führt das erste rechnende Modul 111 in Schritt 211 die Basisfunktion mit der Zufallszahl *a* aus (d.h. $x^a$ mod *n*) und in Schritt 212 mit der Zufallszahl *b* (d.h. $x^b$ mod *n*). Dann multipliziert das erste rechnende Modul 111 die Ergebnisse der Schritte 211 und 212 und wendet auf das Ergebnis dieser Multiplikation das Modulo *n* an.

Das zweite rechnende Modul 112 wiederum Summiert in Schritt 221 die beiden Zufallszahlen *a* und *b* und wendet in Schritt 222 im Bezug auf das Ergebnis dieser Summe des Schritts 221 das Modulo *n* an.

Gemäß dem vorliegenden Ausführungsbeispiel können die Werte *a* und *b* kleiner φ(*n*) sein, da $x^{\phi(n)+1}$ mod *n* = *x* gilt. φ(*n*) bezeichnet dabei die Anzahl der zu *n* teilfremden Zahlen, die kleiner *n* sind. Die vorliegende Erfindung ist jedoch auf diese Wahl der Werte *a* und *b* nicht beschränkt.

Das Prüfen der vorstehenden Gleichung erlaubt das Testen des Chips 121 und somit der Funktionalität des auf dem Chip 121 implementierte kryptographischen Verfahrens und der auf dem Chip 121 gespeicherten Systemparameter, da die drei Exponentiationen ($x^{a+b}$, $x^a$, $x^b$) mit drei verschiedenen Exponenten durchgeführt werden, wobei zwei (hier *a* und *b*) zufällig sind und der dritte Exponent als Addition oder Summe aus den ersten beiden (*a* und *b*) besteht, und die drei Berechnungen zunächst unabhängig voneinander sind. Durch die Relation der Addition oder Summe der Exponenten *a* und *b* und durch die modulare Multiplikation der beiden zufälligen Exponentiationen hängen die drei Exponentiationen mathematisch zusammen. Dieser Zusammenhang wird gemäß dem vorliegenden Ausführungsbeispiel überprüft. Falls die Implementierung der Exponentiation verändert wurde, schlägt dieser Test mit hoher Wahrscheinlichkeit fehl, d.h. die linke Seite der obigen Gleichung wird ungleich der rechten Seite der obigen Gleichung sein, und der Fehler in der Funktionalität wird erkannt.

Sind die Ergebnisse der linken und der rechten Seite der vorstehenden Gleichung durch das erste und das zweite rechnende Modul 111, 112 bestimmt, wird das Vergleichen der beiden Ergebnisse und das Bestimmen des endgültigen Testergebnisses vorgenommen. Dieses erfolgt in Schritt 23 durch das anzeigende Modul 113.

Sind die beiden Ergebnisse gleich, wird der Chip 121 der Chipkarte 12 als unverändert und funktional korrekt bewertet und angezeigt. Sind die beiden Ergebnisse verschieden, wird der Chip 121 der Chipkarte 12 als verändert und funktional inkorrekt bewertet und angezeigt. Im letzteren Fall wird das Ausführen des kryptographischen Verfahrens abgebrochen oder beendet.

Gemäß einem weiteren Ausführungsbeispiel der vorliegenden Erfindung kann der Chip 121 auf eine ähnliche Weise auch durch das Verwenden der folgenden Gleichung geprüft werden:

$$x^{a*b} \bmod n \quad = \quad (x^a \bmod n)^b \bmod n \; .$$

Dabei wird statt einer Summierung eine Multiplikation der Zufallszahlen *a* und *b* vorgenommen, um die dritte Zahl bzw. die dritte Exponente (*a\*b*) zu erhalten.

Das erste rechnende Modul 111 führt in Schritt 211 die Berechnung $x^a$ mod *n* aus, dabei wird die Zufallszahl *a* als Parameter in die Basisfunktion eingebunden. In Schritt 212 bindet das erste rechnende Modul 111 die Zufallszahl *b* als Parameter in die Basisfunktion ein, wobei das Ergebnis des Schritts 211 mit der Zufallszahl *b* potenziert wird und Modulo *n* berechnet wird.

Das zweite rechnende Modul 112 multipliziert wiederum in Schritt 221 die beiden Zufallszahlen *a* und *b* und berechnet in Schritt 222 das Ergebnis von $x^{a*b}$ mod *n*.

Gemäß einem weiteren Ausführungsbeispiel ist ein elliptisches Kurven-Verfahren als kryptographisches Verfahren auf dem Chip 121 der Chipkarte 12 implementiert. Gemäß dem vorliegenden Ausführungsbeispiel handelt es sich hierbei um eine Skalarmultiplikation bei elliptischen Kurven. Als Systemparameter sind dabei ein Punkt *P* einer elliptischen Kurve und die elliptische Kurve selbst bzw. ihre Funktion auf dem Chip 121 der Chipkarte 12 abgespeichert.

Gemäß dem vorliegenden Ausführungsbeispiel wird die folgende Gleichung zum Prüfen des Chips 121 oder der Chipkarte 12 herangezogen:

$$(r+s)*P \quad = \quad r*P + s*P \; .$$

Die Überprüfung des Chips 121 oder der Chipkarte 12 ist den oben erläuterten Überprüfungen ähnlich. Zunächst werden durch den Zufallszahlengenerator 114 zwei Zufallszahlen *r* und *s* als skalare Werte bestimmt. Dieses erfolg in Schritt 20 der Fig. 2. Anschließend prüft das erste rechnende Modul 111 in Schritt 21 die rechte Seite der obigen Gleichung und das zweite rechnende Modul 112 in Schritt 22 die linke Seite der obigen Gleichung.

Durch das erste rechnende Modul 111 wird in Schritt 211 die Multiplikation des Punktes *P* mit der ersten Zufallszahl *r* durchgeführt und in Schritt 212 die Multiplikation des Punktes *P* mit der zweiten Zufallszahl *s* durchgeführt. Ferner werden die Ergebnisse der beiden Multiplikationen durch das erste rechnende Modul 111 mit einander summiert. Auf diese Weise bestimmt das erste rechnende Modul 111 das erste Ergebnis, das dem Ergebnis der rechten Seite der obigen Gleichung entspricht.

Das zweite rechnende Modul 112 summiert oder addiert in Schritt 221 die Zufallszahlen *r* und *s*. In Schritt 222 führt das zweite rechnende Modul 112 die Multiplikation des Punktes *P* mit dem Ergebnis der in Schritt 221 getätigten Addition aus.

In Schritt 23 vergleicht das anzeigende Modul 113 die durch den ersten und den zweiten rechnenden Modul erhaltenen Ergebnisse und zeigt an, ob der Chip 112 der Chipkarte 12 fehlerfrei oder fehlerhaft ist bzw. ob das auf dem Chip 112 implementierte kryptographische Verfahren fehlerfrei oder fehlerhaft abgelaufen ist.

Gemäß einem weiteren Ausführungsbeispiel, in dem ebenfalls ein elliptisches Kurven-Verfahren als kryptographisches Verfahren auf dem Chip 121 der Chipkarte 12 implementiert ist, wird die folgende Gleichung zum Überprüfen des Chips 121 bzw. des kryptographischen Verfahrens herangezogen:

$$(r*s)*P \quad = \quad r*(s*P).$$

Auch gemäß dem vorliegenden Ausführungsbeispiel handelt es sich hierbei um eine Skalarmultiplikation bei elliptischen Kurven. Auch hier sind als Systemparameter ein Punkt *P* einer elliptischen Kurve und die elliptische Kurve selbst bzw. ihre Funktion auf dem Chip 121 der Chipkarte 12 abgespeichert.

Die Überprüfung des Chips 121 oder der Chipkarte 12 ist den oben erläuterten Überprüfungen ähnlich. Zunächst werden durch den Zufallszahlengenerator 114 zwei Zufallszahlen *r* und *s* als skalare Werte bestimmt. Dieses erfolg in Schritt 20 der Fig. 2. Anschließend prüft das erste rechnende Modul 111 in Schritt 21 die rechte Seite der obigen Gleichung und das zweite rechnende Modul 112 in Schritt 22 die linke Seite der obigen Gleichung.

Durch das erste rechnende Modul 111 wird in Schritt 211 die Multiplikation des Punktes *P* mit der Zufallszahl *r* durchgeführt und in Schritt 212 die Multiplikation des in Schritt 211 erzielten Ergebnisses mit der zweiten Zufallszahl *s* durchgeführt. Auf diese Weise bestimmt das erste rechnende Modul 111 das erste Ergebnis, das dem Ergebnis der rechten Seite der obigen Gleichung entspricht.

Das zweite rechnende Modul 112 multipliziert in Schritt 221 die Zufallszahlen *r* und *s*. In Schritt 222 führt das zweite rechnende Modul 112 die Multiplikation des Punktes *P* mit dem Ergebnis der in Schritt 221 getätigten Multiplikation aus.

In Schritt 23 vergleicht das anzeigende Modul 113 die durch den ersten und den zweiten rechnenden Modul erhaltenen Ergebnisse und zeigt an, ob der Chip 112 der Chipkarte 12 fehlerfrei oder fehlerhaft ist bzw. ob das auf dem Chip 112 implementierte kryptographische Verfahren fehlerfrei oder fehlerhaft abgelaufen ist.

Gemäß dem vorliegenden Ausführungsbeispiel können die zufälligen skalaren Werte *r* und *s* derart gewählt werden, dass sie kleiner der Ordnung *q* des Punktes *P* sind.

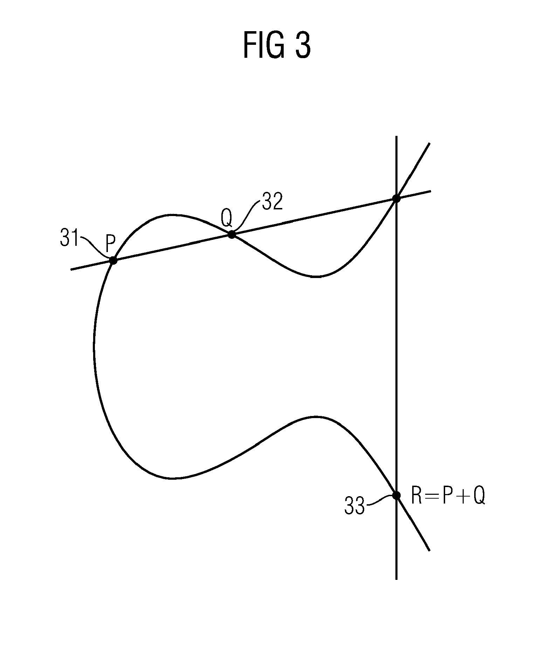

Fig. 3 verdeutlicht eine Summenoperation zwischen zwei Punkten einer elliptischen Kurve, welche im Verfahren zum Prüfen eines Chips gemäß einem Ausführungsbeispiel der vorliegenden Erfindung verwendet wird. Dabei sind "P" 31 und "Q" 32 die zwei Punkte der elliptischen Kurve, die summiert bzw. addiert werden. Der Punkt "R=P+Q" 33 zeigt den Punkt an, der durch das Summieren bzw. Addieren erhalten wurde.

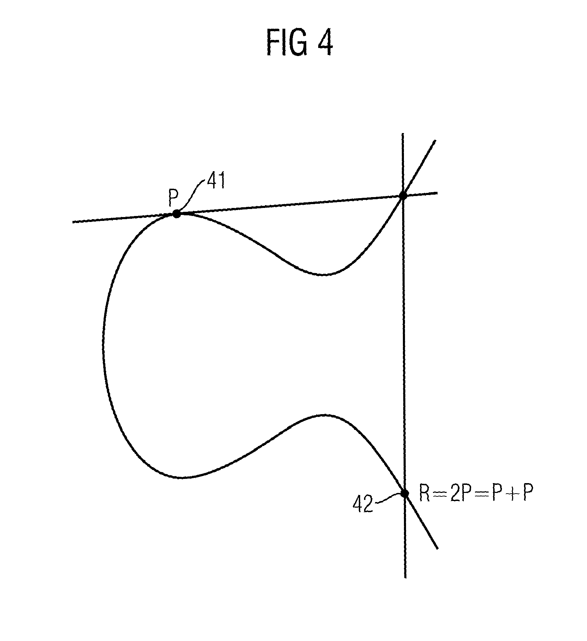

Fig. 4 zeigt eine Multiplikation eines Punktes einer elliptischen Kurve mit einer Zahl, welche im Verfahren zum Prüfen eines Chips gemäß einem Ausführungsbeispiel der vorliegenden Erfindung verwendet wird. Gemäß dem vorliegenden Ausführungsbeispiel wird der Punkt "P" 41 mit der Zahl 2 multipliziert. Der Punkt "R=2P=P+P" 42 zeigt den Punkt der elliptischen Kurve an, der durch das Multiplizieren erhalten wurde.

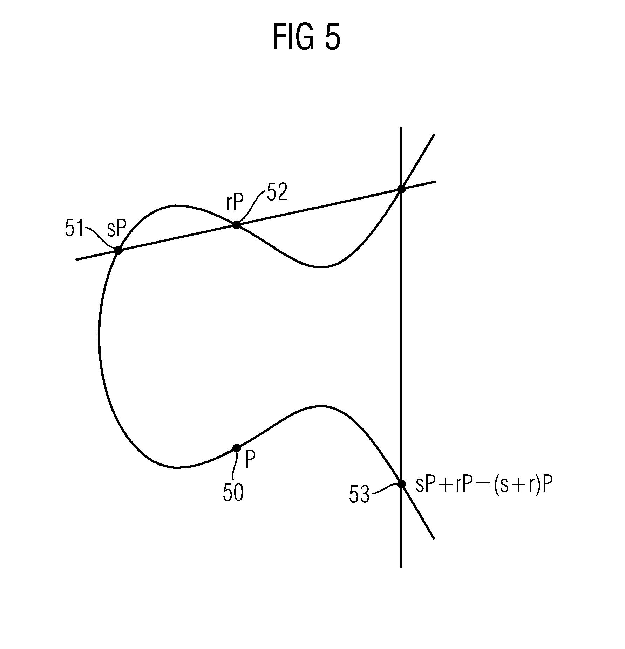

Fig. 5 veranschaulicht das Durchführen des Prüfens eines Chips gemäß einem Ausführungsbeispiel der vorliegenden Erfindung.

Dieses Ausführungsbeispiel bezieht sich insbesondere auf die oben vorgestellte Gleichung:

$$(r+s)*P \quad = \quad r*P+s*P.$$

Der Punkt "P" 50 entspricht dabei dem Ausgangspunkt, d.h. dem Punkt der als Systemparameter auf dem Chip 121 der Chipkarte 12 zum Spezifizieren des kryptographischen Verfahrens abgespeichert ist.

Der Punkt "sP" 51 zeigt den Punkt an, der nach der Multiplikation des Ausgangspunktes "P" 51 mit der Zufallszahl s in Schritt 212 erhalten wird. Der Punkt "rP" 52 zeigt wiederum den Punkt an, der nach der Multiplikation des Ausgangspunktes "P" 51 mit der Zufallszahl *r* in Schritt 211 erhalten wurde.

Der Punkt "sP+rP=(s+r)P" 53 zeigt den Punkt an, der im Falle eines fehlerfreien (d.h. nicht veränderten und/oder nicht manipulierten) Chips 121 als Ergebnis der beiden Seiten der obigen Gleichung geliefert wird.

Somit betrifft die vorliegende Erfindung das Prüfen eines Chips, auf dem ein kryptographisches Verfahren implementiert ist. Dabei wird ein erstes Ergebnis bestimmt durch: ein erstes Ausführen der Basisfunktion unter Verwendung einer ersten Zahl als Parameter der Basisfunktion; und ein zweites Ausführen der Basisfunktion unter Verwendung einer zweiten Zahl als Parameter der Basisfunktion, wobei die erste und die zweite Zahl Zufallszahlen sind. Ein zweites Ergebnis wird bestimmt durch: Bestimmen einer dritten Zahl durch Ausführen einer mathematischen Operation, bei der die erste und die zweite Zahl Operanden der mathematischen Operation sind; und ein drittes Ausführen der Basisfunktion unter Verwendung der dritten Zahl als Parameter der Basisfunktion. Der Chip wird als fehlerfrei angezeigt, wenn das erste und das zweite Ergebnis gleich sind. Die vorliegende Erfindung ist dort anwendbar, wo ein sicheres Handhaben von Daten gewünscht ist und/oder gewünscht ist. Sie ermöglicht ein zuverlässiges Testen von Chips, auf denen kryptographische Verfahren implementiert sind.

Auf diese Weise bietet die vorliegende Erfindung eine Methodik, die ein randomisiertes bzw. zufallsbasiertes Testen bzw. Prüfen eines Chips oder einer Chipkarte erlaubt, auf dem/der ein kryptographisches Verfahren implementiert ist. Somit ermöglicht die vorliegende Erfindung ein randomisiertes bzw. zufallsbasiertes Testen bzw. Prüfen von (asymmetrischen) kryptographischen Verfahren. Dabei wird bei jedem einzelnen Durchführen des Tests neue Skalare oder Exponenten zufällig gewählt, was das Manipulieren eines kryptographischen Verfahrens und somit eines dieses Verfahren enthaltenden Chips oder einer dieses Verfahren enthaltenden Chipkarte deutlich erschwert bis unmöglich macht.

Unter Verwendung eines guten Zufallsgenerators können bei jedem Test neue Zwischenergebnisse entstehen, welche nicht vorhersagbar sind. Die Wahrscheinlichkeit, dass ein Softwarefehler oder eine Manipulation auf diese Weise unerkannt bleibt, ist somit gleich Null.

Die bekannten Testverfahren, die statische Tests erlauben, liefern hingegen immer gleiche Ergebnisse. Diese sind bei jeder Ausführung identisch. Auf diese Weise sind die bekannten Testverfahren manipulierbar.

Auf diese Weise bietet die vorliegende Erfindung ein deutlich verbessertes Testen von (asymmetrischen) kryptographischen Verfahren und von Chips oder Chipkarten, auf denen (asymmetrische) kryptographische Verfahren implementiert sind, wobei unter anderem die Zuverlässigkeit der Testergebnisse gesteigert wird.

Obwohl die Erfindung oben mit Bezug auf die Ausführungsbeispiele gemäß den beiliegenden Zeichnungen erklärt wird, ist es ersichtlich, dass die Erfindung nicht auf diese beschränkt ist, sondern innerhalb des Bereichs der oben und in den anhängigen Ansprüchen offenbarten erfinderischen Idee modifiziert werden kann. Es versteht sich von selbst, dass es noch weitere Ausführungsbeispiele geben kann, die den Grundsatz der Erfindung darstellen und äquivalent sind, und dass somit verschiedene Modifikationen ohne Abweichen vom Umfang der Erfindung implementiert werden können.

So z.B. können die oben vorgestellten Module Soft- und/oder Hardwaremodule sein. Ferner können die Funktionalitäten der jeweiligen Module in ein Modul verschmolzen werden oder über verschiedene entsprechend ausgestaltete Module verteilt werden.

**Patentansprüche**

1. Vorrichtung (11), die zum Prüfen eines Chips (121) konfiguriert ist, auf dem ein kryptographisches Verfahren implementiert ist, wobei die Vorrichtung (11) aufweist:

   - ein erstes rechnendes Modul (111), das konfiguriert ist, ein erstes Ergebnis zu bestimmen (21) durch:

      - ein erstes Ausführen (211) einer Basisfunktion des kryptographischen Verfahrens unter Verwendung einer ersten Zahl als einen Parameter der Basisfunktion, wobei die erste Zahl eine Zufallszahl ist; und
      - ein zweites Ausführen (212) der Basisfunktion des kryptographischen Verfahrens unter Verwendung einer zweiten Zahl als den Parameter der Basisfunktion, wobei die zweite Zahl eine Zufallszahl ist;

   - ein zweites rechnendes Modul (112), das konfiguriert ist, ein zweites Ergebnis zu bestimmen (22) durch:

      - Bestimmen (221) einer dritten Zahl durch Ausführen einer mathematischen Operation, bei der die erste und die zweite Zahl Operanden der mathematischen Operation sind; und
      - ein drittes Ausführen (222) der Basisfunktion des kryptographischen Verfahrens unter Verwendung der dritten Zahl als den Parameter der Basisfunktion;

- ein anzeigendes Modul (113), das konfiguriert ist, den Chip (121) als fehlerfrei anzuzeigen, wenn das erste Ergebnis und das zweite Ergebnis gleich sind, und den Chip (121) als fehlerhaft anzuzeigen, wenn das erste Ergebnis und das zweite Ergebnis verschieden sind.

2. Vorrichtung (11) nach Anspruch 1, wobei die Vorrichtung (11) einen Zufallszahlengenerator (114) aufweist, der konfiguriert ist, die erste Zahl und die zweite Zahl zu bestimmen.

3. Vorrichtung (11) nach Anspruch 1 oder 2, wobei das erste rechnende Modul (111) konfiguriert ist, das erste Ergebnis durch ein Summieren von Ergebnissen des ersten Ausführens (211) der Basisfunktion und des zweiten Ausführens (212) der Basisfunktion zu bestimmen, und wobei die mathematische Operation eine Addition ist.

4. Vorrichtung (11) nach Anspruch 3, wobei die Basisfunktion Operationen auf Punkten einer elliptischen Kurve aufweist und wobei der Parameter der Basisfunktion ein skalarer Wert ist, der mit einem Punkt der elliptischen Kurve multipliziert wird.

5. Vorrichtung (11) nach Anspruch 4, wobei das erste rechnende Modul (111) und das zweite rechnende Modul (112) derart konfiguriert sind, dass:

   - das erste Ausführen (211) der Basisfunktion des kryptographischen Verfahrens ein Multiplizieren der ersten Zahl mit dem Punkt der elliptischen Kurve aufweist;
   - das zweite Ausführen (212) der Basisfunktion des kryptographischen Verfahrens ein Multiplizieren der zweiten Zahl mit dem Punkt der elliptischen Kurve aufweist; und
   - das dritte Ausführen (222) der Basisfunktion des kryptographischen Verfahrens ein Multiplizieren der dritten Zahl mit dem Punkt der elliptischen Kurve aufweist.

6. Vorrichtung (11) nach Anspruch 1 oder 2, wobei das erste rechnende Modul (111) konfiguriert ist, das erste Ergebnis durch ein Multiplizieren von Ergebnissen des ersten Ausführens (211) der Basisfunktion und des zweiten Ausführens (212) der Basisfunktion zu bestimmen, wobei die mathematische Operation (221) eine Addition ist.

7. Vorrichtung (11) nach Anspruch 6, wobei die Basisfunktion eine modulare Exponentiation ist, die im Bezug auf einen vorbestimmten Modul und auf einen vorbestimmten Basiswert ausgeführt wird, und wobei der Parameter der Basisfunktion eine Zahl zum Potenzieren des vorbestimmten Basiswerts angibt.

8. Vorrichtung (11) nach Anspruch 7, wobei das erste rechnende Modul (111) und das zweite rechnende Modul (112) derart konfiguriert sind, dass:

   - das erste Ausführen (211) der Basisfunktion ein Anwenden der modularen Exponentiation mit dem vorbestimmten Modul und dem vorbestimmten Basiswert aufweist, wobei der vorbestimmte Basiswert mit der ersten Zahl potenziert wird;
   - das zweite Ausführen (212) der Basisfunktion ein Anwenden der modularen Exponentiation mit dem vorbestimmten Modul und dem vorbestimmten Basiswert aufweist, wobei der vorbestimmte Basiswert mit der zweiten Zahl potenziert wird; und
   - das dritte Ausführen (222) der Basisfunktion ein Anwenden der modularen Exponentiation mit dem vorbestimmten Modul und dem vorbestimmten Basiswert aufweist, wobei der vorbestimmte Basiswert mit der dritten Zahl potenziert wird.

9. Vorrichtung (11) nach Anspruch 1 oder 2, wobei das erste rechnende Modul (111) konfiguriert ist, das zweites Ausführen (212) der Basisfunktion im Bezug auf ein durch das erste Ausführen (211) erhaltene Ergebnis durchzuführen, und wobei die mathematische Operation eine Multiplikationsoperation ist.

10. Vorrichtung (11) nach Anspruch 9, wobei die Basisfunktion Operationen auf Punkten einer elliptischen Kurve aufweist und wobei der Parameter der Basisfunktion ein skalarer Wert ist, der mit einem Punkt der elliptischen Kurve multipliziert wird.

11. Vorrichtung (11) nach Anspruch 10, wobei das erste rechnende Modul (111) und das zweite rechnende Modul (112) derart konfiguriert sind, dass:

   - das erste Ausführen (211) der Basisfunktion des kryptographischen Verfahrens ein Multiplizieren der ersten Zahl mit dem Punkt der elliptischen Kurve aufweist;
- das zweite Ausführen (212) der Basisfunktion des kryptographischen Verfahrens ein Multiplizieren der zweiten Zahl mit einem weiteren Punkt der elliptischen Kurve aufweist, wobei der weitere Punkt der elliptischen Kurve durch das erste Ausführen (211) erhalten wird; und
- das dritte Ausführen (222) der Basisfunktion des kryptographischen Verfahrens ein Multiplizieren der dritten Zahl mit dem Punkt der elliptischen Kurve aufweist.

12. Vorrichtung (11) nach Anspruch 9, wobei die Basisfunktion eine modulare Exponentiation ist, die im Bezug auf einen vorbestimmten Modul und auf einen vorbestimmten Basiswert ausgeführt wird, und wobei der Parameter der Basisfunktion eine Zahl zum Potenzieren des vorbestimmten Basiswerts angibt.

13. Vorrichtung (11) nach Anspruch 12, wobei das erste rechnende Modul (111) und das zweite rechnende Modul (112) derart konfiguriert sind, dass:

- das erste Ausführen (211) der Basisfunktion ein Anwenden der modularen Exponentiation mit dem vorbestimmten Modul und dem vorbestimmten Basiswert aufweist, wobei der vorbestimmte Basiswert mit der ersten Zahl potenziert wird;
- das zweite Ausführen (212) der Basisfunktion ein Anwenden der modularen Exponentiation mit dem vorbestimmten Modul und einem Ergebnis des ersten Ausführens (211) als Basiswert aufweist, wobei das Ergebnis des ersten Ausführens (211) mit der zweiten Zahl potenziert wird; und
- das dritte Ausführen (222) der Basisfunktion ein Durchführen der modularen Exponentiation mit dem vorbestimmten Modul und dem vorbestimmten Basiswert aufweist, wobei der vorbestimmte Basiswert mit der dritten Zahl potenziert wird.

14. Vorrichtung (11) nach einem der vorstehenden Ansprüche, wobei das kryptographische Verfahren zumindest eine der folgenden Aktionen aufweist:

- Verschlüsseln von Daten;
- Entschlüsseln von Daten;
- Authentisierung;
- digitales Signieren; und/oder
- Prüfen einer digitalen Signatur.

15. Vorrichtung (11) nach zumindest einem der vorstehenden Ansprüche, wobei die Vorrichtung (11) ausgestaltet ist, das kryptographische Verfahren durchzuführen und das Prüfen des Chips (121) vor dem Durchführen des kryptographischen Verfahrens auszuführen.

16. Vorrichtung (11) nach zumindest einem der Ansprüche 4, 5, 10 und 11, wobei die elliptische Kurve und der Punkt der elliptischen Kurve Systemparameter sind, die auf dem Chip (121) gespeichert sind, und wobei die Vorrichtung (11) ein Lesemodul (115) aufweist, das konfiguriert ist, die Systemparameter aus dem Chip (121) zu lesen.

17. Vorrichtung (11) nach zumindest einem der Ansprüche 7, 8, 12 und 13, wobei der vorbestimmte Modul und der vorbestimmte Basiswert Systemparameter sind, die auf dem Chip (121) gespeichert sind, und wobei die Vorrichtung (11) ein Lesemodul (115) aufweist, das konfiguriert ist, die Systemparameter aus dem Chip zu lesen.

18. Verfahren zum Prüfen eines Chips (121), auf dem ein kryptographisches Verfahren implementiert ist, wobei das Verfahren aufweist:

- Bestimmen (21) eines ersten Ergebnisses durch:

- ein erstes Ausführen (211) einer Basisfunktion des kryptographischen Verfahrens unter Verwendung einer ersten Zahl als einen Parameter der Basisfunktion, wobei die erste Zahl eine Zufallszahl ist; und
- ein zweites Ausführen (212) der Basisfunktion des kryptographischen Verfahrens unter Verwendung einer zweiten Zahl als den Parameter der Basisfunktion, wobei die zweite Zahl eine Zufallszahl ist;

- Bestimmen (22) eines ersten Ergebnisses durch:

- Bestimmen (221) einer dritten Zahl durch Ausführen einer mathematischen Operation, bei der die erste und die zweite Zahl Operanden der mathematischen Operation sind; und
- ein drittes Ausführen (222) der Basisfunktion des kryptographischen Verfahrens unter Verwendung der dritten Zahl als den Parameter der Basisfunktion;

- Anzeigen (23) von Ergebnissen des Prüfens des Chips (121), wobei der Chip (121) als fehlerfrei angezeigt wird, wenn das erste Ergebnis und das zweite Ergebnis gleich sind, und wobei der Chip (121) als fehlerhaft angezeigt wird, wenn das erste Ergebnis und das zweite Ergebnis verschieden sind.

19. Computerprogrammprodukt, das eine Kodierung aufweist, die konfiguriert ist, ein Verfahren nach Anspruch 18 zu implementieren.

20. Datenträger, wobei der Datenträger ein Computerprogrammprodukt nach Anspruch 19 aufweist.

21. System (1), wobei das System (1) eine Vorrichtung (11) nach zumindest einem der Ansprüche 1 bis 17 aufweist.

# FIG 1

# FIG 2

# FIG 3

# FIG 4

# FIG 5

**Europäisches Patentamt**
**European Patent Office**
**Office européen des brevets**

# EUROPÄISCHER RECHERCHENBERICHT

Nummer der Anmeldung

EP 10 16 0598

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2005/066168 A1 (WALMSLEY SIMON ROBERT [AU]) 24. März 2005 (2005-03-24) <br> * Zusammenfassung * <br> * Absätze [0336] - [0367] * <br> ----- | 1-21 | INV. <br> H04L9/30 <br> G01R31/3193 |
| A | US 5 991 898 A (RAJSKI JANUSZ [US] ET AL) 23. November 1999 (1999-11-23) <br> * Zusammenfassung * <br> * Spalte 3, Zeile 65 - Spalte 4, Zeile 41 * <br> ----- | 1-21 | |
| A | HAFNER K ET AL: "DESIGN AND TEST OF AN INTEGRATED CRYPTOCHIP" <br> IEEE DESIGN & TEST OF COMPUTERS, IEEE SERVICE CENTER, NEW YORK, NY, US LNKD-DOI:10.1109/54.107201, <br> Bd. 8, Nr. 4, <br> 1. Dezember 1991 (1991-12-01), Seiten 6-17, XP000263447 <br> ISSN: 0740-7475 <br> * das ganze Dokument * <br> ----- | 1-21 | |

| RECHERCHIERTE SACHGEBIETE (IPC) |
|---|
| H04L <br> G01R |

Der vorliegende Recherchenbericht wurde für alle Patentansprüche erstellt

| Recherchenort | Abschlußdatum der Recherche | Prüfer |
|---|---|---|
| München | 27. September 2010 | Di Felice, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

EPO FORM 1503 03.82 (P04C03)

**EP 2 278 752 A1**

**ANHANG ZUM EUROPÄISCHEN RECHERCHENBERICHT**
**ÜBER DIE EUROPÄISCHE PATENTANMELDUNG NR.**

EP 10 16 0598

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-09-2010

| Im Recherchenbericht angeführtes Patentdokument | | Datum der Veröffentlichung | Mitglied(er) der Patentfamilie | | Datum der Veröffentlichung |
|---|---|---|---|---|---|
| US 2005066168 | A1 | 24-03-2005 | US | 2010031064 A1 | 04-02-2010 |
| | | | US | 2005010778 A1 | 13-01-2005 |
| US 5991898 | A | 23-11-1999 | US | 6728901 B1 | 27-04-2004 |

Für nähere Einzelheiten zu diesem Anhang : siehe Amtsblatt des Europäischen Patentamts, Nr.12/82